# EUROPEAN PATENT SPECIFICATION

(11) **EP 3 663 334 B1**
(45) Date of publication and mention of the grant of the patent: **25.02.2026**
(21) Application number: 18840668.0
(22) Date of filing: 16.03.2018
(51) Int. Cl.: C08J 5/08, C08J 5/06, C08J 5/04, C08K 3/04, D06M 15/55, D06M 13/184

(54) **FIBER-REINFORCED RESIN AND METHOD FOR MANUFACTURING SAME**
FASERVERSTÄRKTES HARZ UND VERFAHREN ZUR HERSTELLUNG DAVON
RÉSINE RENFORCÉE DE FIBRES ET PROCÉDÉ POUR SA FABRICATION

(30) Priority: 01.08.2017 JP 2017149426
(43) Date of publication of application: 10.06.2020
(73) Proprietor: Hitachi, Ltd., Tokyo 100-8280 (JP)
(72) Inventor: KONDO Takeshi, Tokyo 100-8280 (JP); KAGAWA Hiroyuki, Tokyo 100-8280 (JP); SUWA Yuji, Tokyo 100-8280 (JP); ISHII Toshiaki, Tokyo 100-8280 (JP); HOUJOU Fusao, Tokyo 100-8280 (JP)
(74) Representative: MERH-IP Matias Erny Reichl Hoffmann Patentanwälte PartG mbB
(86) International application number: PCT/JP2018/010427
(87) International publication number: WO 2019/026328

(56) References cited:
- EP-A1- 2 669 309
- WO-A1-2018/006090
- WO-A1-2019/026329
- JP-A- 2014 503 670
- JP-A- 2015 214 661
- JP-A- 2015 516 994
- JP-A- 2017 088 739
- JP-A- 2017 512 244
- US-A1- 2010 075 134
- US-A1- 2013 059 988
- US-A1- 2013 059 988
- DAMIEN MONTARNAL ET AL: "Silica-Like Malleable Materials from Permanent Organic Networks", SCIENCE, vol. 334, no. 6058, 15 November 2011 (2011-11-15), pages 965 - 968, XP055670866, DOI: 10.1126/science.1212648
- NUNOSHIGE, JUN ET AL : "Restoration function of fractured thermosetting polymer via living radical polymerization by alkylborane initiator", JOURNAL OF NETWORK POLYMER, vol. 36, no. 4, 10 July 2015 (2015-07-10), Japan, pages 192 - 198, XP055654153

## Description

### TECNICAL FIELD

The present invention relates to a fiber-reinforced resin, and a method for producing the fiber-reinforced resin.

### BACKGROUND ART

Fiber-reinforced resins obtained by reinforcing a resin with fiber are excellent in strength and elastic modulus while being light in weight, and are therefore used in many fields such as automobiles, railways, aircraft and building members. Many of them are thermosetting fiber-reinforced resins in which a thermosetting resin is combined with glass fiber or carbon fiber. However, the fiber-reinforced resin has a bonding surface between different kinds of materials such as fiber and resin. Thus, in the case where a fiber-reinforced resin is thermally expanded and thermally shrunk due to a temperature change, a difference in thermal expansion coefficient between materials causes distortion. Occurrence of distortion results in cracking and peeling at bonding interface, and leading to deterioration of reliability of the fiber-reinforced resin. Thus, a fiber-reinforced resin having high reliability is desired.

Preferably, a fiber-reinforced resin is excellent in adhesiveness between fiber and resin for suppressing cracking and peeling. For improving interfacial adhesiveness between fiber and resin, a method is normally carried out in which fiber is subjected to oxidation treatment such as gas phase oxidation or liquid phase oxidation to introduce oxygen-containing functional groups to the fiber surface. Regarding this method, PTL 1 discloses carbon fiber in which the strand elastic modulus is 30t/mm² or more, the surface oxygen concentration O/C of the carbon fiber, which is measured by X-ray photoelectron spectroscopy, is 0.20 or less, and the surface oxygen concentration O/C, and the surface hydroxyl group concentration index S and the surface carboxyl group concentration index K of the carbon fiber, which are measured by chemical modification X-ray photoelectron spectroscopy, satisfy a predetermined relationship.

Patent Literature 2 discloses an epoxy resin composition for RTM molding of a fiber-reinforced composite material, including [A] to [D] below, wherein [A]/[B], which is a blend mass ratio of [A] to [B], is in the range of 55/45 to 95/5: [A] a multifunctional epoxy resin that is liquid at normal temperature or has a softening point of 65°C or lower, the multifunctional epoxy resin being at least one selected from phenol novolac epoxy resin, cresol novolac epoxy resin, and triphenylmethane epoxy resin; [B] an alicyclic epoxy resin; [C] an acid anhydride curing agent; and [D] a curing accelerator.

Patent Literature 3 discloses methods of reshaping and recycling thermoset polymers and composites containing thermoset polymers that involve the bond exchange reaction of exchangeable covalent bonds in the polymer matrix with a suitable small molecule solvent in the presence of a catalyst. The methods are applied to a carbon fiber reinforced polymer or a thermoset polymer where the thermoset polymer matrix includes a plurality of ester bonds. Using a small molecule alcohol, the methods provide for recycling one or both of the carbon fiber and the polymer, for welding two surfaces, or for repairing a damaged surface in the materials.

Patent Literature 4 discloses a composite material which includes one or both of functionalized reinforcement materials and functionalized polymer matrix materials, as well as a method for repairing a composite material including the step of thermally treating the composite material at a temperature sufficient to react a functionality on one of the reinforcement material and the polymer matrix material with another functionality via a Diels-Alder reaction.

Patent Literature 5 discloses a fiber-reinforced resin composite consisting of multiple fiber-reinforced resins joined together. The matrix resin contains dynamic covalent bonds, enabling good durability and re-bonding capability. The individual resin components are stitched together using suture threads. The composite is manufactured using a special device that includes a suturing unit with a suture needle and a heating unit. The heating unit selectively softens the resin in front of, beneath, or behind the needle to facilitate the stitching process.

Non-Patent Literature 1 discloses epoxy networks that can rearrange their topology by exchange reactions without depolymerization and are insoluble and processable. These networks show Arrhenius-like gradual viscosity variations like those of vitreous silica. Like silica, the materials can be wrought and welded to make complex objects by local heating without the use of molds.

### CITATION LIST

### PATENT LITERATURE

PATENT LITERATURE 1: Japanese Patent Application H04-361619 A
Patent Literature 2: EP 2 669 309 A1
Patent Literature 3: WO 2018/006090 A1
Patent Literature 4: US 2013/059988 A1
Patent Literature 5: WO 2019/026329 A1

### NON-PATENT LITERATURE

Non-Patent Literature 1: Damien Montarnal et al: "Silica-Like Malleable Materials from Permanent Organic Networks", SCIENCE, vol. 334, no. 6058, 15 November 2011 (2011-11-15), pages 965-968, XP055670866, DOI: 10.1126/science. 1212648

### SUMMARY OF INVENTION

### TECHNICAL PROBLEM

In recent years, fiber-reinforced resins have been required to have higher properties. Stress cannot be relaxed with interfacial adhesiveness which can be achieved by oxidation treatment or the like, and oxidation treatment or the like is insufficient as a technique for preventing cracking and peeling. Thus, in conventional techniques, interfacial adhesiveness between fiber and resin is not sufficient particularly for suppressing cracking and peeling.

The present invention has been made in view of the above-mentioned problems, and an object to be achieved by the present invention is to provide a fiber-reinforced resin having higher interfacial adhesiveness between fiber and resin than before, and a method for producing the fiber-reinforced resin.

### SOLUTION TO PROBLEM

The aforementioned object is solved by the invention according to the independent claims. Further preferred developments are described by the dependent claims. The present inventors have extensively conducted studies for achieving the above-described object, and resultantly found findings, leading to completion of the present invention. Other solutions will be described in Description of Embodiments below.

### ADVANTAGEOUS EFFECTS OF INVENTION

According to the present invention, it is possible to provide a fiber-reinforced resin having higher interfacial adhesiveness between fiber and resin than before, and a method for producing the fiber-reinforced resin.

### BRIEF DESCRIPTION OF DRAWINGS

[FIG. 1] FIG. 1 is a sectional view of a fiber-reinforced resin having a catalyst supported on a surface of fiber.
[FIG. 2] FIG. 2 is a sectional view of a fiber-reinforced resin having a curing agent supported on a surface of fiber.
[FIG. 3] FIG. 3 is a sectional view of a fiber-reinforced resin in which either a catalyst or a curing agent is not supported on a surface of fiber.

### DESCRIPTION OF EMBODIMENTS

Hereinafter, embodiments of the present invention (present embodiments) will be described with reference to the drawings as appropriate.

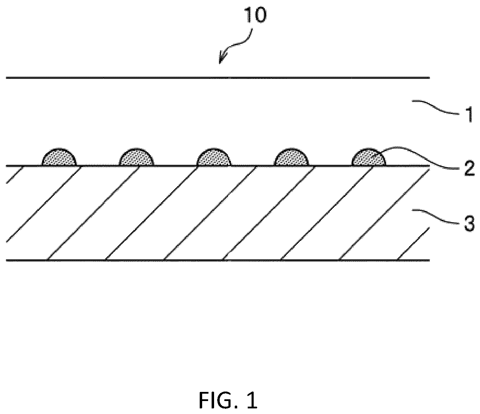

FIG. 1 is a sectional view of a fiber-reinforced resin 10 having a catalyst 2 supported on a surface of fiber 3. As shown in FIG. 1, the fiber-reinforced resin 10 includes a resin 1 and fiber 3, with the catalyst 2 supported on the surface of the fiber 3. The resin 1 has a dynamic covalent bond which is reversibly dissociated and bound by an external stimulus (heat or light). The catalyst 2 accelerates dissociation and binding of the dynamic covalent bond.

The dynamic covalent bond is a covalent bond which can be reversibly dissociated and bound by an external stimulus. In the fiber-reinforced resin 10, the dynamic covalent bond is incorporated in a network structure of the resin 1. In the resin 1 having a dynamic covalent bond, the network structure is changed by the dynamic covalent bond. Thus, when stress such as distortion occurs in the resin 1, it is expected to relax the stress and suppress cracking.

The resin 1 having a dynamic covalent bond according to the invention is an epoxy resin. Among them, resins having a structure including a monomer which forms an ester bond at the time of curing, or an ester bond as a monomer backbone are preferable from the viewpoint of mechanical strength.

Preferably, the monomer which forms an ester bond at the time of curing is composed of an epoxy compound having a polyfunctional epoxy group and a carboxylic anhydride or a polyvalent carboxylic acid as a curing agent. Further, the epoxy compound is preferably a bisphenol A-type resin, a novolac-type resin, cycloaliphatic resin or a glycidylamine resin.

Examples of the epoxy include, but are not limited to, bisphenol A diglycidyl ether phenol, bisphenol F diglycidyl ether, bisphenol S diglycidyl ether, resorcinol diglycidyl ether, hexahydrobisphenol A diglycidyl ether, polypropylene glycol diglycidyl ether, neopentyl glycol diglycidyl ether, phthalic acid diglycidyl ester, dimer acid diglycidyl ester, triglycidyl isocyanurate, tetraglycidyl diaminodiphenylmethane, tetraglycidyl metaxylenediamine, cresol novolac polyglycidyl ether, tetrabromobisphenol A diglycidyl ether and bisphenol hexafluoroacetone diglycidyl ether.

The catalyst 2 is preferably one that is uniformly dispersed in a raw material solution (described later) of the fiber-reinforced resin 10. Examples of the catalyst 2 which accelerates interesterification include, but are not limited to, zinc acetate (II), zinc (II) acetylacetonate, zinc naphthenate (II), acetylacetone iron (III), acetylacetone cobalt (II), aluminum isopropoxide, titanium isopropoxide, methoxide(triphenylphosphine) copper (I) complexes, ethoxide(triphenylphosphine) copper (I) complexes, propoxide(triphenylphosphine) copper (I) complexes, isopropoxide(triphenylphosphine) copper (I) complexes, methoxidebis(triphenylphosphine) copper (II) complexes, ethoxidebis(triphenylphosphine) copper (II) complexes, propoxidebis(triphenylphosphine) copper (II) complexes, isopropoxidebis(triphenylphosphine) copper (II) complexes, tris(2,4-pentanedionato) cobalt (III), tin diacetate (II), tin (II) di(2-ethylhexanoate), N,N-dimethyl-4-aminopyridine, diazabicycloundecene, diazabicyclononene, triazabicyclodecene and triphenylphosphine.

Examples of the fiber 3 include inorganic fibers and organic fibers. Examples of the inorganic fibers include aramid fibers, glass fibers, asbestos fibers, carbon fibers, silica fibers, silica/alumina fibers, alumina fibers, zirconia fibers, potassium titanate fibers, tyrano fibers, silicon carbide fibers and metal fibers. Examples of the organic fibers include high-strength polyethylene fibers, polyacetal fibers, aliphatic or aromatic polyamide fibers, polyacrylate fibers, fluorine fibers, boron fibers, polyacrylonitrile fibers, aramid fibers and PBO(poly-p-phenylenebenzobisoxazole) fibers. These fibers can be used alone, or in combination of two or more thereof.

Among these fibers 3, organic fibers, particularly carbon fibers are preferable from the viewpoint of mechanical strength and the like. Carbon fibers can be classified into synthetic polymer-derived carbon fibers (polyacrylonitrile-based carbon fibers, polyvinyl alcohol-based carbon fibers, rayon-based carbon fibers, etc.) and mineral-derived carbon fibers (pitch-based carbon fibers etc.) on the basis of raw materials thereof. Among these fibers, synthetic polymer-derived carbon fibers are preferable from the viewpoint of mechanical strength.

In the fiber-reinforced resin 10, the catalyst 2 is localized at the bonding interface between the resin 1 and the fiber 3 (i.e. the surface of the fiber 3), resulting in development of reversible dissociation and binding. In other words, the catalyst 2 which accelerates recombination of binding, and functional groups bound to the dynamic covalent bond are localized on the surface of the fiber 3 to relax stress occurring at the interface between the resin 1 and the fiber 3, leading to suppression of cracking and peeling.

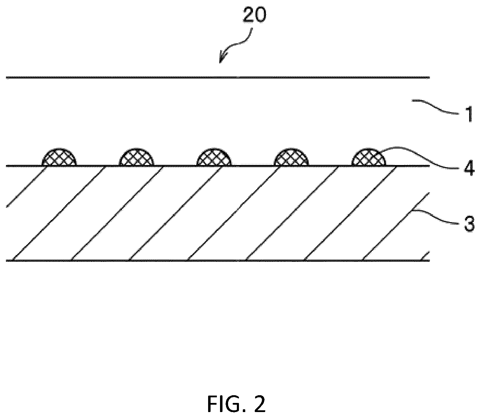

FIG. 2 is a sectional view of a fiber-reinforced resin 20 with a curing agent 4 supported on the surface of the fiber 3. In FIG. 1, the catalyst 2 is supported, and in the example shown in FIG. 2, instead of the catalyst 2, the curing agent 4 for curing the resin 1 is supported on the surface of the fiber 3. Even in such a configuration, stress occurring at the interface between the resin 1 and the fiber 3 is relaxed, leading to suppression of cracking and peeling.

Examples of the curing agent 4 include acid anhydrides and carboxylic acids. Examples thereof include carboxylic anhydrides and polyvalent carboxylic acids. Specific examples thereof include, but are not limited to, phthalic anhydride, tetrahydrophthalic anhydride, hexahydrophthalic anhydride, methyltetrahydrophthalic anhydride, 3-dodecenylsuccinic anhydride, octenylsuccinic anhydride, methylhexahydrophthalic anhydride, methylnadic anhydride, dodecylsuccinic anhydride, chlorendic anhydride, pyromellitic anhydride, benzophenonetetracarboxylic anhydride, ethylene glycol bis(anhydrotrimate), methylcyclohexenetetracarboxylic anhydride, trimellitic anhydride, polyazelaic anhydride, ethylene glycol bisanhydrotrimellitate, 1,2,3,4-butanetetracarboxylic acid, 4-cyclohexene-1,2-dicarboxylic acid and polyvalent fatty acid. The catalyst 2 may be used in combination with the curing agent 4.

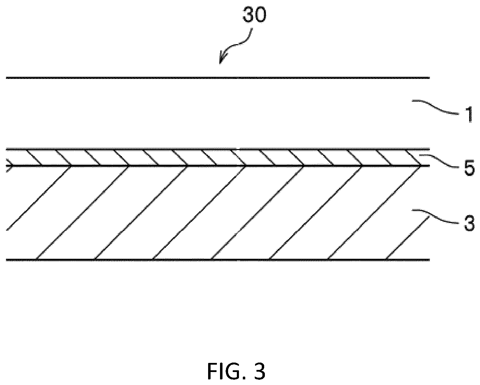

FIG. 3 is a sectional view of the fiber-reinforced resin 20 in which either the catalyst 2 or the curing agent 4 is not supported on the surface of the fiber 3. That is, in the fiber-reinforced resin 30, the resin 1 and the fiber 3 are provided, and a stress concentration portion 5 where stress is concentrated when stress is applied is present at the bonding interface between the resin 1 and the fiber 3. The stress concentration portion 5 is present as a part of the resin 1. Therefore, when the stress concentration portion 5 is present as a part of the resin 1, cracking and peeling occur between the stress concentration portion 5 and the fiber 3 because the resin 1 is homogenously formed.

A method for producing a fiber-reinforced resin according to the present embodiment will now be described.

The fiber-reinforced resin is obtained by using at least one of a monomer which forms a dynamic covalent bond at the time of curing and a monomer which has a structure including a dynamic covalent bond and which is capable of forming a crosslinked structure (or using a mixture of both the monomers). That is, the fiber-reinforced resin is obtained by passing through a support step of bringing fiber into contact with an organic solution in which at least one of a catalyst and a curing agent (hereinafter, referred to a catalyst etc.) is dispersed, and then drying the fiber to support the catalyst etc. on a surface of the fiber; and a resin contact curing step of bringing the resin solution into contact with the fiber obtained through the support step and having the catalyst etc. supported on the surface thereof, and then performing curing.

As a more specific method, the fiber having the catalyst or the curing agent (or both) supported on the surface thereof is impregnated with the monomer, and cured by heating or the like to obtain the fiber-reinforced resin. Alternatively, the fiber is impregnated with a mixture containing the monomer and the catalyst or the curing agent, heated and cured to obtain the fiber-reinforced resin. Preferably, the curing time and the curing temperature, which vary depending on the types of the above-mentioned ingredients, are appropriately adjusted according to the purpose.

The fiber-reinforced resin obtained after curing has a dynamic covalent bond inside the resin and a catalyst for accelerating recombination of the dynamic covalent bond (in the case of the fiber reinforced catalyst 10). This catalyst causes exchange reaction. As an example, a chemical reaction formula of interesterification which is one form of dynamic covalent bonding is shown below. In this chemical reaction formula, R, R' and R" each represent an arbitrary chemical structure.

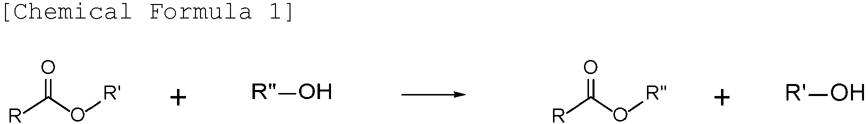

As described above, the catalyst etc. is supported on the surface of the fiber in the fiber-reinforced resin of the present embodiment. The method for supporting the catalyst etc. on the fiber surface is not particularly limited, and examples thereof include a method in which fiber is soaked with a solution of the catalyst etc., and dried; and a method in which the fiber surface is subjected to oxidation treatment to chemically bind the catalyst etc.

In the method in which fiber is soaked with a solution of the catalyst etc., the solvent to be used for the solution can be arbitrarily selected according to the type of the catalyst etc. to be used, and examples thereof include alcohols, ketones, ethers, hydrocarbons, cellosolves, amides, sulfoxides, nitriles, nitro compounds and organic acids. These solvents can be used alone, or in combination of two or more thereof.

As a specific method for oxidation treatment in the method in which the fiber surface is subjected to oxidation treatment to chemically binding the catalyst etc., a method can be applied in which the surface of fiber is oxidized with ozone, UV or the like, and the surface is chemically bound with a coupling agent having a structure of the catalyst etc. Examples of the coupling agent include imidazole silane coupling agents.

### EXAMPLES

Hereinafter, the present invention will be described in further detail by way of examples.

### <Example 1>

Carbon fiber (CO6343 manufactured by Toray Industries, Inc.) was immersed in an ethyl acetate solution with zinc (II) acetylacetonate (manufactured by Wako Pure Chemical Industries, Ltd.) dissolved as a catalyst with a concentration of 1 mol/L, and was then dried at 40°C for 24 hours. Accordingly, the catalyst was supported on the surface of the carbon fiber. 0.5 mol equivalent of a curing agent (HN-2200 manufactured by Hitachi Chemical Co., Ltd.) and 0.1 mol equivalent of zinc (II) acetylacetonate (manufactured by Wako Pure Chemical Industries, Ltd.) as a catalyst were then added to epoxy resin (jER828 manufactured by Mitsubishi Chemical Corporation), and the mixture was stirred and mixed in the air. The carbon fiber having the catalyst supported thereon was impregnated with this solution in vacuum, and heated at 120°C for 12 hours to cure the mixture. Through the above operation, a fiber-reinforced resin test piece was obtained as a resin having a catalyst supported on the fiber surface.

Using a temperature cycler test machine, the obtained test piece was heated from -50°C to 150°C at a rate of 5°C/min using a temperature cycle tester, then cooled from 150°C to -50°C at a rate of 5°C/min. A cross-section of a bonding interface between the resin and the fiber in a test piece after a total of 10 cycles with the above cycle set to 1 cycle was observed by X-ray CT. The result showed that the resin and the fiber were sufficiently bonded together, and the resin was not peeled at the interface.

### <Example 2>

Carbon fiber (CO6343 manufactured by Toray Industries, Inc.) was immersed in an ethyl acetate solution with a curing agent (HN-2200 manufactured by Hitachi Chemical Co., Ltd.) dissolved therein with a concentration of 1 mol/L, and was then dried at 40°C for 24 hours. Accordingly, the curing agent was supported on the surface of the carbon fiber. 0.5 mol equivalent of a curing agent (HN-2200 manufactured by Hitachi Chemical Co., Ltd.) and 0.1 mol equivalent of zinc (II) acetylacetonate (manufactured by Wako Pure Chemical Industries, Ltd.) as a catalyst were then added to epoxy resin (jER828 manufactured by Mitsubishi Chemical Corporation), and the mixture was stirred and mixed in the air. The carbon fiber having the catalyst supported thereon was impregnated with this solution in vacuum, and heated at 120°C for 12 hours to cure the mixture. Through the above operation, a fiber-reinforced resin test piece was obtained as a resin having a curing agent supported on the fiber surface.

The obtained test piece was subjected to the same temperature cycle test as in Example 1, a bonding interface between the resin and the fiber in a test piece after 10 cycles was observed by X-ray CT. The result showed that the resin and the fiber were sufficiently bonded together, and the resin was not peeled at the interface.

### <Example 3>

Carbon fiber (CO6343 manufactured by Toray Industries, Inc.) was immersed in an ethyl acetate solution with bis(β-epithiopropyl) disulfide dissolved as a curing agent with a concentration of 1 mol/L, and was then dried at 40°C for 24 hours. Accordingly, the curing agent was supported on the surface of the carbon fiber. 0.5 mol equivalent of bis(β-epithiopropyl) disulfide as a curing agent and 0.1 mol equivalent of zinc (II) acetylacetonate (manufactured by Wako Pure Chemical Industries, Ltd.) as a catalyst were then added to epoxy resin (jER828 manufactured by Mitsubishi Chemical Corporation), and the mixture was stirred and mixed in the air. The carbon fiber having the catalyst supported thereon was impregnated with this solution in vacuum, and heated at 120°C for 12 hours to cure the mixture. Through the above operation, a fiber-reinforced resin test piece was obtained as a resin having a curing agent supported on the fiber surface.

The obtained test piece was subjected to the same temperature cycle test as in Example 1, a bonding interface between the resin and the fiber in a test piece after 10 cycles was observed by X-ray CT. The result showed that the resin and the fiber were sufficiently bonded together, and the resin was not peeled at the interface.

### <Example 4>

Glass fiber (WF110D100BS6 manufactured by Nitto Boseki Co., Ltd.) was immersed in an ethyl acetate solution with zinc (II) acetylacetonate (manufactured by Wako Pure Chemical Industries, Ltd.) dissolved as a catalyst with a concentration of 1 mol/L, and was then dried at 40°C for 24 hours. Accordingly, the catalyst was supported on the surface of the carbon fiber. 0.5 mol equivalent of a curing agent (HN-2200 manufactured by Hitachi Chemical Co., Ltd.) and 0.1 mol equivalent of zinc (II) acetylacetonate (manufactured by Wako Pure Chemical Industries, Ltd.) as a catalyst were then added to epoxy resin (jER828 manufactured by Mitsubishi Chemical Corporation), and the mixture was stirred and mixed in the air. The carbon fiber having the catalyst supported thereon was impregnated with this solution in vacuum, and heated at 120°C for 12 hours to cure the mixture. Through the above operation, a fiber-reinforced resin test piece was obtained as a resin having a curing agent supported on the fiber surface.

The obtained test piece was subjected to the same temperature cycle test as in Example 1, a bonding interface between the resin and the fiber in a test piece after 10 cycles was observed by X-ray CT. The result showed that the resin and the fiber were sufficiently bonded together, and the resin was not peeled at the interface.

### <Comparative Example 1>

0.5 mol equivalent of a curing agent (HN-2200 manufactured by Hitachi Chemical Co., Ltd.) and 0.1 mol equivalent of zinc (II) acetylacetonate (manufactured by Wako Pure Chemical Industries, Ltd.) as a catalyst were added to epoxy resin (jER828 manufactured by Mitsubishi Chemical Corporation), and the mixture was stirred and mixed in the air. Carbon fiber (CO6343 manufactured by Toray Industries, Inc.) was impregnated with the obtained solution in vacuum, and heated at 120°C for 12 hours to cure the mixture. Through the above operation, a fiber-reinforced resin test piece was obtained as a resin not having a catalyst supported on the fiber surface.

The obtained test piece was subjected to the same temperature cycle test as in Example 1, a bonding interface between the resin and the fiber in a test piece after 10 cycles was observed by X-ray CT. The result showed that peeling occurred at the interface between the resin and the fiber.

### <Comparative Example 2>

0.5 mol equivalent of a curing agent (HN-2200 manufactured by Hitachi Chemical Co., Ltd.) and 0.1 mol equivalent of zinc (II) acetylacetonate (manufactured by Wako Pure Chemical Industries, Ltd.) as a catalyst were added to epoxy resin (jER828 manufactured by Mitsubishi Chemical Corporation), and the mixture was stirred and mixed in the air. Glass fiber (WF110D100BS6 manufactured by Nitto Boseki Co., Ltd.) was impregnated with the obtained solution in vacuum, and heated at 120°C for 12 hours to cure the mixture. Through the above operation, a fiber-reinforced resin test piece was obtained as a resin not having a catalyst supported on the fiber surface.

The obtained test piece was subjected to the same temperature cycle test as in Example 1, a bonding interface between the resin and the fiber in a test piece after 10 cycles was observed by X-ray CT. The result showed that peeling occurred at the interface between the resin and the fiber.

### <Conclusion>

The above results reveals that in the fiber-reinforced resins prepared in Examples 1 to 4, peeling did not occur at the interface between the resin and the fiber. Thus, it is possible to provide a fiber-reinforced resin having higher interfacial adhesiveness between fiber and resin than before, and a method for producing the fiber-reinforced resin. Reference Signs List

- 1: resin
- 2: catalyst
- 3: fiber
- 4: curing agent
- 5: stress concentration portion
- 10, 20, 30: fiber-reinforced resin

## Claims

1. A fiber-reinforced resin comprising a resin reinforced with fiber, wherein
the resin is a cured resin of a resin composition including an epoxy resin composition, a catalyst, and a curing agent, the resin has a dynamic covalent bond which is reversibly dissociated and bound by heat or light, and
the catalyst for accelerating dissociation and/or the curing agent are supported on a surface of the fiber.

2. The fiber-reinforced resin according to claim 1, wherein the fiber is at least one selected from the group consisting of aramid fiber, glass fiber and carbon fiber.

3. The fiber-reinforced resin according to claim 1 or 2, wherein the curing agent is at least one of an acid anhydride and a carboxylic acid.

4. A method for producing the fiber-reinforced resin described in claim 1 or 2, the method comprising:
a support step of bringing the fiber into contact with an organic solution in which at least one of the catalyst and the curing agent is dispersed, and then drying the fiber to support at least one of the catalyst and the curing agent on the surface of the fiber; and
a resin contact curing step of bringing a resin solution into contact with the fiber obtained through the support step and having at least one of the catalyst and the curing agent supported on the surface thereof, and then performing curing.

## Patentansprüche

1. Faserverstärktes Harz, umfassend ein mit Faser verstärktes Harz, wobei
das Harz ein gehärtetes Harz aus einer Harzzusammensetzung ist, die eine Epoxidharzzusammensetzung, einen Katalysator und ein Härtungsmittel umfasst, wobei das Harz eine dynamische kovalente Bindung aufweist, die reversibel dissoziiert und durch Wärme oder Licht gebunden wird, und
der Katalysator zum Beschleunigen der Dissoziation und/oder das Härtungsmittel auf einer Oberfläche der Faser getragen werden.

2. Faserverstärktes Harz nach Anspruch 1, wobei die Faser mindestens eine ist, die aus der Gruppe ausgewählt ist, die aus Aramidfaser, Glasfaser und Kohlenstofffaser besteht.

3. Faserverstärktes Harz nach Anspruch 1 oder 2, wobei das Härtungsmittel mindestens eines von einem Säureanhydrid und einer Carbonsäure ist.

4. Verfahren zur Herstellung des in Anspruch 1 oder 2 beschriebenen faserverstärkten Harzes, wobei das Verfahren umfasst:
einen Trägerschritt des Inkontaktbringens der Faser mit einer organischen Lösung, in der mindestens eines von dem Katalysator und dem Härtungsmittel dispergiert ist, und dann des Trocknens der Faser, um mindestens eines von dem Katalysator und dem Härtungsmittel auf der Oberfläche der Faser zu tragen; und
einen Harzkontakthärtungsschritt des Inkontaktbringens einer Harzlösung mit der Faser, die durch den Trägerschritt erhalten wird und auf deren Oberfläche mindestens eines von dem Katalysator und dem Härtungsmittel getragen wird, und dann des Durchführens einer Härtung.

## Revendications

1. Résine renforcée par des fibres comprenant une résine renforcée par des fibres, dans laquelle
la résine est une résine durcie d'une composition de résine comprenant une composition de résine époxy, un catalyseur et un agent de durcissement, la résine possède une liaison covalente dynamique qui est dissociée et liée de manière réversible par la chaleur ou la lumière, et
le catalyseur pour accélérer la dissociation et/ou l'agent de durcissement sont supportés sur une surface de la fibre.

2. Résine renforcée par des fibres selon la revendication 1, dans laquelle la fibre est au moins une fibre choisie dans le groupe constitué par les fibres d'aramide, les fibres de verre et les fibres de carbone.

3. Résine renforcée par des fibres selon la revendication 1 ou 2, dans laquelle l'agent de durcissement est au moins un anhydride d'acide et un acide carboxylique.

4. Procédé de production de la résine renforcée par des fibres décrite dans la revendication 1 ou 2, le procédé comprenant :
une étape de support consistant à mettre la fibre en contact avec une solution organique dans laquelle au moins l'un du catalyseur et de l'agent de durcissement est dispersé, puis à sécher la fibre pour supporter au moins l'un du catalyseur et de l'agent de durcissement sur la surface de la fibre ; et
une étape de durcissement par contact avec la résine consistant à mettre en contact une solution de résine avec la fibre obtenue par l'étape de support et sur laquelle est supporté au moins l'un parmi le catalyseur et l'agent de durcissement, puis à effectuer le durcissement.
